# FASCICULE DE BREVET EUROPEEN

(11) **EP 2 904 329 B1**
(45) Date de publication et mention de la délivrance du brevet: **27.11.2019**
(21) Numéro de dépôt: 13779286.7
(22) Date de dépôt: 23.09.2013
(51) Int. Cl.: F23R 3/30, F23R 3/34, F23D 11/44

(54) **INJECTEUR A DOUBLE CIRCUIT DE CHAMBRE DE COMBUSTION DE TURBOMACHINE**
INJEKTOR MIT ZWEI SCHALTKREISEN FÜR EINE TURBINENMOTORBRENNKAMMER
TWO-CIRCUIT INJECTOR FOR A TURBINE ENGINE COMBUSTION CHAMBER

(30) Priorité: 01.10.2012 FR 1259287
(43) Date de publication de la demande: 12.08.2015
(73) Titulaire: Safran Helicopter Engines, 64510 Bordes (FR)
(72) Inventeur: CARRERE, Bernard, F-64000 Pau (FR)
(74) Mandataire: Regimbeau
(86) Numéro de dépôt international: PCT/FR2013/052205
(87) Numéro de publication internationale: WO 2014/053730

(56) Documents cités:
- CH-A- 288 548
- CH-A- 326 697
- FR-A1- 2 971 039
- GB-A- 914 906
- GB-A- 914 906
- US-A- 2 693 082
- US-A- 2 949 012
- US-A- 5 167 122
- US-A1- 2003 019 215

## Description

### DOMAINE DE L'INVENTION

Le domaine de l'invention est celui des injecteurs de chambres de combustion de turbomachines, notamment des injecteurs de démarrage de la combustion.

L'invention concerne également des turbomachines munies de tels injecteurs.

### ETAT DE LA TECHNIQUE

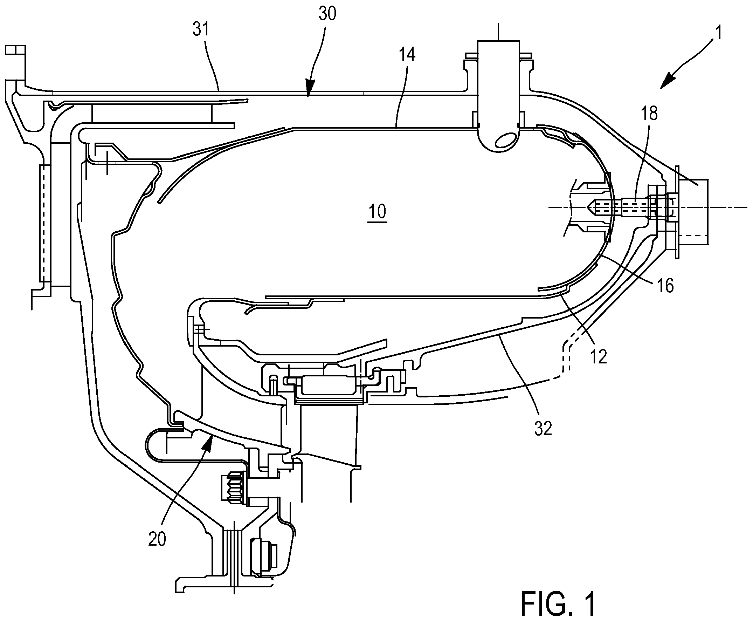

En référence à la figure 1, les turbomachines 1 comportent classiquement une chambre de combustion 10 et un distributeur 20 logés dans un carter 30, la chambre de combustion étant délimitée par des parois de révolution externe 14 et interne 12 s'étendant l'une à l'intérieur de l'autre et étant reliées par une paroi annulaire 16 de fond de chambre.

Le carter présente également une paroi interne 32 et une paroi externe 31 auxquelles sont respectivement fixées les parois internes 12 et externes 14 de la chambre de combustion.

Un mélange d'air et de carburant est injecté dans la chambre de combustion par une pluralité d'injecteurs 18 montés sur la paroi de fond de chambre, et répartis sur toute la circonférence de celle-ci.

Plusieurs types d'injecteurs sont disposés dans une chambre de combustion, parmi lesquels les injecteurs de démarrage, qui comprennent un gicleur injectant le mélange d'air et de carburant, et une bougie enflammant ce mélange.

Pour caractériser les injecteurs on utilise une grandeur appelée Flow Number (FN) égale au débit en L/h de l'injecteur divisé par la pression en bars du mélange injecté. Les injecteurs de démarrage présentent un Flow Number typiquement compris entre 1.2 et 1.5.

Les autres injecteurs sont dédiés aux régimes post-démarrage : régimes transitoires d'accélération ou décélération et régimes stationnaires en vol. Ces injecteurs présentent un Flow Number bien plus important, compris entre 9 et 10, c'est-à-dire que leur débit d'injection de carburant est plus élevé.

Ces injecteurs comprennent des gicleurs projetant un mélange d'air et de carburant sur une paroi chaude de la chambre de combustion, cette paroi ayant été chauffée par un injecteur de démarrage au préalable, de sorte que le carburant s'enflamme à son contact.

Les injecteurs de démarrage classiques présentent certains inconvénients, parmi lesquels un effet de soufflage important, lié au courant d'air dans la chambre de combustion, qui empêche le démarrage ou le redémarrage du moteur tant que celui-ci n'a pas ralenti à moins de 20% de sa capacité. On ne peut donc pas rallumer immédiatement un moteur qui vient de s'éteindre.

Les moteurs sont également fragilisés du fait qu'il faut réaliser deux orifices par injecteur dans la chambre de combustion et dans le carter pour faire pénétrer à l'intérieur de la chambre un gicleur et une bougie.

En outre, lors du démarrage du moteur, il faut allumer toute la chambre de combustion en même temps. Or, comme on l'a vu, le débit des injecteurs de démarrage étant faible, il est nécessaire de positionner sur toute la circonférence de la paroi du fond de la chambre de combustion un nombre important d'injecteurs. Ceci alourdit le moteur et le rend plus coûteux à produire.

Le document US 2,949,012 décrit une chambre de combustion comprenant un injecteur de démarrage disposé dans un espace de la chambre de combustion recevant le flux d'air de ladite chambre. Du carburant allumé par cet injecteur permet de chauffer une paroi vers laquelle est injecté du carburant par un injecteur principal, de manière que le carburant s'enflamme au contact de la paroi.

Cet assemblage dans la chambre de combustion ne permet pas de remédier à l'effet de soufflage, puisqu'en particulier l'injecteur de démarrage est exposé au flux d'air de la chambre de combustion. Par conséquent, en cas de régime moteur élevé, il n'est pas possible de démarrer l'allumage du carburant.

Par ailleurs, le document GB914906 décrit un dispositif selon le préambule de la revendication 1.

### PRESENTATION GENERALE

L'invention a pour but de pallier au moins l'un des inconvénients mentionnés ci-avant. Notamment, l'invention a pour but de proposer un injecteur de chambre de combustion permettant le démarrage de la chambre quel que soit le régime du moteur.

Un autre but de l'invention est de permettre un allumage plus rapide de la chambre de combustion et qui soit de ce fait plus économe en carburant.

A cet égard, l'invention a pour objet un ensemble de combustion de turbomachine selon l'objet de la revendication 1.

Avantageusement, mais facultativement, l'invention peut en outre comprendre au moins l'une des caractéristiques suivantes :
- le circuit d'injection de carburant comprend une entrée d'alimentation de carburant et un clapet de surpression obturant l'alimentation du circuit de démarrage de la combustion lorsque la pression du carburant est inférieure à un seuil prédéterminé.
- le seuil de pression en-deçà duquel le clapet de surpression obture l'alimentation du circuit de démarrage de la combustion est compris entre 2.5 et 3 bar.
- l'injecteur de carburant du circuit de démarrage est un injecteur de prévaporisation adapté pour vaporiser le carburant.
- la bougie d'allumage est une bougie à incandescence ou une bougie à étincelles.
- l'enceinte présente des parois extérieures munies d'ouvertures d'admission d'air.

L'invention a enfin pour objet une turbomachine comprenant une chambre de combustion et au moins un injecteur selon l'invention.

Avantageusement, mais facultativement, la turbomachine selon l'invention comprend un carter dans lequel est disposée la chambre de combustion, et l'injecteur est rapporté sur ledit carter de sorte que :
- l'enceinte cloisonnée pénètre à l'intérieur de la chambre de combustion au travers du carter et d'une paroi de ladite chambre,
- l'ouverture d'évacuation du carburant de ladite enceinte débouche dans la chambre de combustion, et
- les ouvertures d'admission d'air des parois de ladite enceinte débouchent dans un interstice entre le carter et la chambre de combustion.

L'ensemble proposé par l'invention présente de nombreux avantages.

Le circuit d'allumage du carburant étant disposé dans une enceinte, l'injecteur est beaucoup moins exposé au phénomène de soufflage car l'enceinte agit comme une pré-chambre de combustion dont les parois confinent l'air. L'allumage du carburant est donc plus rapide et permet de diminuer de façon importante la consommation de carburant au démarrage.

En outre, la protection contre le soufflage permet de pouvoir démarrer ou redémarrer la chambre de combustion même quand celle-ci vient de s'arrêter, sans attendre que le moteur ait ralenti à 20% de sa capacité.

L'injecteur, grâce à son circuit principal de démarrage, présente un débit de carburant plus important qu'un injecteur de démarrage traditionnel. Ce débit permet d'allumer une proportion plus importante de la chambre de combustion, et donc de diminuer le nombre d'injecteurs à utiliser et à allumer en même temps. La turbomachine est allégée, donc moins coûteuse à produire et plus économe en carburant.

Enfin, l'injecteur selon l'invention est compact, puisqu'il comprend un unique circuit d'injection de carburant qui alimente les deux circuits d'allumage du carburant, ce qui permet de ne réaliser qu'un seul orifice par injecteur dans les parois du carter et de la chambre de combustion.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà décrite, est une vue en coupe d'un carter de turbomachine au niveau de la chambre de combustion.
- La figure 2 représente un exemple de réalisation d'un ensemble selon l'invention.
- La figure 3 représente schématiquement un circuit d'injection de carburant d'un injecteur de la figure 2.
- Les figures 4a à 4c représentent des vues en coupes de l'injecteur représenté en figure 2, la figure 4a étant une vue en coupe selon l'axe AA représenté en figure 4c, et la figure 4b étant une vue en coupe selon l'axe BB représenté en figure 4c.
- La figure 5 représente une vue de dessous d'un injecteur de la figure 2.
- La figure 6 représente l'installation d'un injecteur dans la chambre de combustion d'une turbomachine.
- La figure 7 représente une chronologie de l'allumage d'une chambre de combustion grâce à un injecteur selon l'invention.

### DESCRIPTION DETAILLEE D'UN MODE DE REALISATION

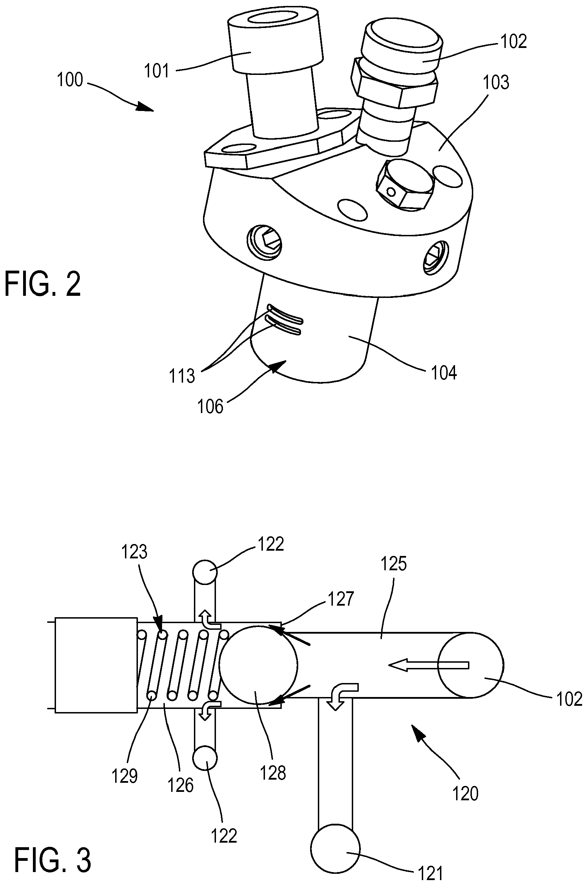

En référence à la figure 2, on a représenté un injecteur de démarrage 100 d'une chambre de combustion de turbomachine. Il comprend une bougie 101 d'allumage de carburant, et une arrivée 102 de carburant.

La bougie 101 peut être une bougie à étincelles, ou de préférence une bougie à incandescence, qui présente une taille réduite par rapport à la bougie à étincelles et permet de diminuer le volume de l'injecteur 100.

En référence à la figure 3, l'injecteur 100 comporte un circuit d'injection de carburant 120 en communication de fluide avec l'arrivée 102 de carburant, et avec deux circuits 130 et 140 destinés à allumer la chambre de combustion.

De retour à la figure 2, le circuit d'injection de carburant est disposé dans un capot 103 de l'injecteur, destiné à être fixé sur le carter 30 d'une turbomachine 1, par exemple par boulonnage.

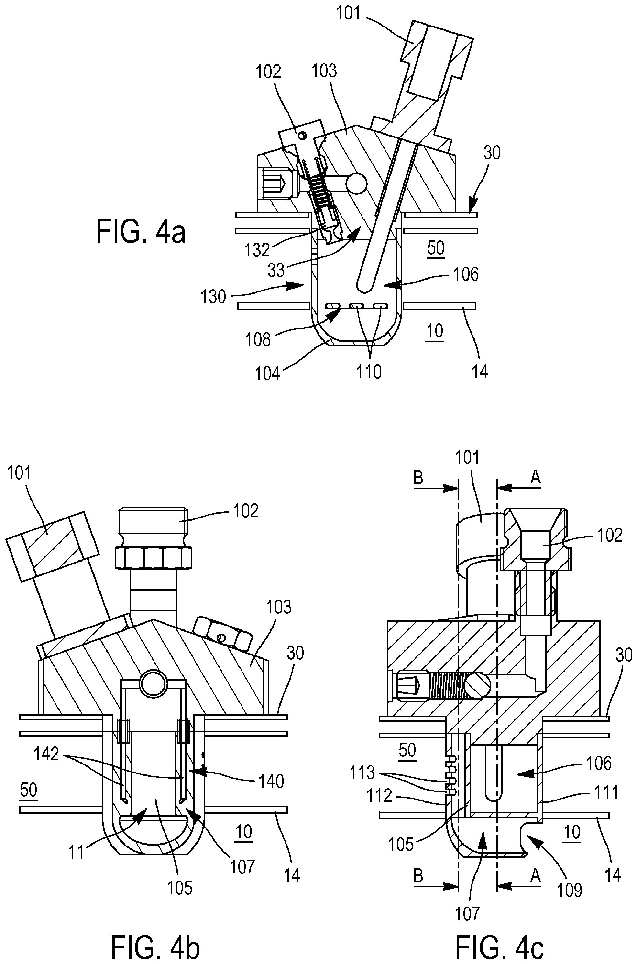

Une enceinte 104, dans laquelle a lieu l'allumage du carburant avant que celui-ci ne pénètre dans la chambre de combustion, s'étend en saillie du capot 103. Comme visible en figures 4a à 4c, l'injecteur est rapporté sur le carter 30 de sorte que cette enceinte 104 pénètre à l'intérieur du carter 30 via un orifice 33 agencé dans celui-ci.

De plus, elle pénètre à l'intérieur de la chambre de combustion 10 via un orifice 11 agencé dans la paroi externe 14 de celle-ci, cet orifice se trouvant en regard de l'orifice 33 du carter.

L'enceinte 104 débouche à l'intérieur de la chambre de combustion 10 par une ouverture 109 d'évacuation du carburant brulé.

En référence aux figures 4a à 4c, l'enceinte 104 comporte une paroi 105 formant une cloison thermiquement conductrice entre deux compartiments 106 et 107. Cette paroi 105 est avantageusement réalisée en métal, par exemple en acier.

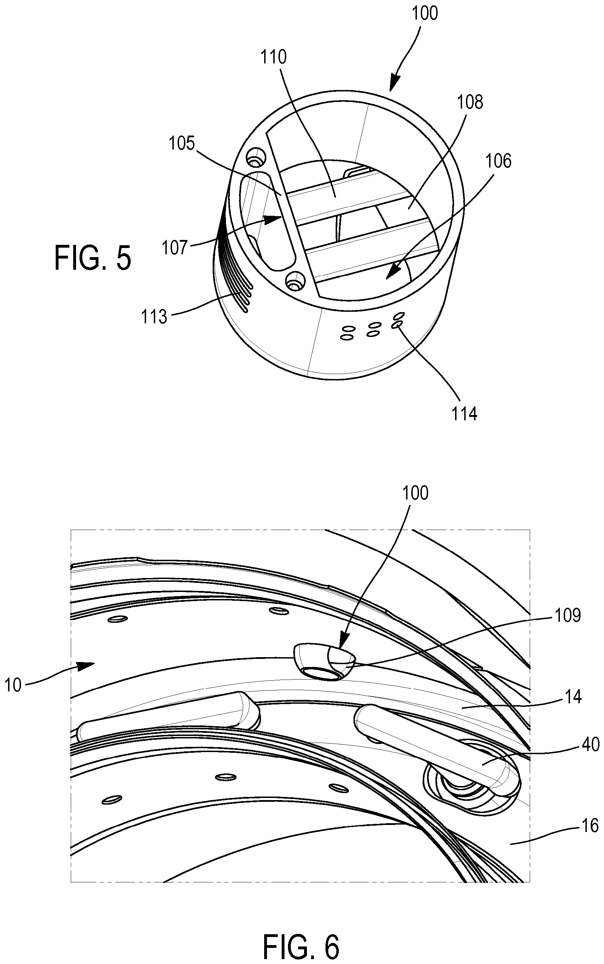

Comme visible sur la figure 6, représentant une vue de dessous de l'injecteur 100, et sur les figures 4a et 4c, la cloison 105 ne sépare pas complètement les deux compartiments 106 et 107.

En effet, le compartiment 106 présente une ouverture 108 d'évacuation du carburant brulé, cette ouverture débouchant dans le compartiment 107, avantageusement à proximité de l'ouverture 109 d'évacuation du carburant brulé de ce compartiment 107.

Par « à proximité de l'ouverture 109 », on entend que l'ouverture 108 débouche dans le compartiment 107 en une zone suffisamment proche de l'ouverture 109 pour ne contenir que du carburant enflammé, l'allumage du carburant ayant lieu plus en amont dans le compartiment 107 par rapport au trajet du carburant dans ce compartiment.

L'ouverture 108 du premier compartiment 106 communique donc avec le second compartiment 107 pour que l'ensemble du carburant enflammé soit évacué de l'injecteur 100 par l'ouverture 109 du deuxième compartiment 107.

La paroi 105 formant cloison entre les deux compartiments 106, 107 est maintenue en position par une pluralité d'entretoises 110 qui s'étendent en travers du compartiment 106, entre la paroi 105 et la paroi 111 de l'enceinte cloisonnée 104 disposée en regard de celle-ci.

Les interstices entre ces entretoises 110 définissent l'ouverture 108 du premier compartiment 106.

Enfin, la paroi 112 de l'enceinte cloisonnée se trouvant opposée à la paroi 111 par rapport à la cloison 105 est munie d'une pluralité d'orifices 113 d'admission d'air, permettant la combustion du carburant dans le compartiment 107.

L'une des parois entourant le compartiment 106, par exemple la paroi 111 ou une des parois adjacentes à celle-ci comprend également des orifices 114 d'alimentation d'air, visibles sur la figure 5.

Ces orifices débouchent dans un interstice 50 situé entre la paroi externe 14 de la chambre de combustion et la paroi 31 correspondante du carter, et dans lequel circule un flux d'air.

On va maintenant décrire les deux circuits d'allumage de la chambre de combustion 10. Sur la figure 4a, le premier circuit 130 d'allumage de la chambre de combustion est représenté.

Ce circuit est un circuit d'allumage du carburant. A cet égard, il comporte un injecteur de carburant 132, alimenté en carburant par le circuit d'injection de carburant 110, et qui projette du carburant dans le premier compartiment 106 de l'enceinte cloisonnée 104. Le carburant injecté dans le compartiment 106 est enflammé par une extrémité de la bougie 101 qui pénètre à l'intérieur du compartiment 106.

Le carburant enflammé chauffe les parois de l'enceinte cloisonnée entourant le compartiment 107, et notamment la cloison 105 séparant le premier compartiment 106 du second 107.

Une fois enflammé, le carburant est évacué vers la chambre de combustion par l'ouverture 108 puis par l'ouverture 109 du compartiment 107.

En référence aux figures 4b et 4c, le deuxième circuit d'allumage de la chambre de combustion 140, appelé circuit principal de démarrage de la combustion, car il présente un débit de carburant important, permettant de causer l'allumage de la chambre de combustion, comprend au moins un injecteur 142 de carburant, de préférence deux injecteurs 142, alimentés également par le même circuit 120 d'injection de carburant.

Ces injecteurs 142 sont des injecteurs de prévaporisation, qui projettent du carburant sous forme de vapeur à l'intérieur du compartiment 107, au contact de parois suffisamment chaudes de l'enceinte 104 pour causer l'allumage du carburant. De préférence, les injecteurs 142 sont orientés vers la cloison 105 chauffée par le circuit d'allumage 130 pour projeter le carburant contre cette cloison, et pour que le carburant s'enflamme au contact de cette cloison.

Le carburant une fois enflammé pénètre dans la chambre de combustion 10 par l'ouverture 109 du compartiment 107.

Un injecteur 100 positionné sur une chambre de combustion 10 est représenté en figure 6. L'injecteur est placé sur la paroi annulaire externe 14 de la chambre de combustion et débouche dans celle-ci par l'ouverture 109. Des cannes de prévaporisation 40 sont également prévues pour enflammer un débit plus important de carburant à partir du carburant enflammé injecté par l'injecteur 100. Ces cannes de prévaporisation sont disposées sur la paroi 16 de fond de la chambre de combustion 10.

De retour à la figure 3, le circuit d'injection de carburant 120 est commun aux deux circuits 130 et 140 d'allumage de la chambre de combustion. Pour permettre une alimentation en carburant adaptée à chaque circuit, le circuit d'injection de carburant comprend une sortie 121 d'alimentation de l'injecteur de carburant 132 du premier circuit d'allumage 130, et une ou plusieurs sorties 122 destinées à alimenter autant d'injecteurs 142 du deuxième circuit 140.

En outre, un clapet de surpression 123 obture les sorties de carburant 122 pour une pression de carburant inférieure à un seuil donné, par exemple compris entre 2,5 et 3 bars, de sorte que pour une telle pression, le carburant s'écoule uniquement vers l'injecteur de carburant 132.

Lorsque la pression de carburant excède ledit seuil, le clapet de surpression 123 libère les ouvertures 122 pour alimenter les injecteurs du deuxième circuit 140.

A cet effet, le clapet de surpression 123 comprend un premier canal 125 s'étendant depuis l'ouverture 102 d'alimentation du carburant et débouchant d'une part vers la sortie 121, et d'autre part sur un second canal 126 de diamètre plus important que le premier canal 125. De ce fait, le second canal 126 présente, au niveau de la jonction avec le premier canal 125, un rebord périphérique 127.

Une bille 128 de diamètre supérieur au diamètre du premier canal 125, mais inférieure à celui du second canal 126, est placée dans le second canal 126, en relation de glissement avec celui-ci.

Elle est maintenue en appui contre le rebord annulaire 127 par un ressort 129 dont le tarage, c'est-à-dire la pression à exercer pour combattre la force de rappel et compresser le ressort, correspond au seuil de pression précité pour libérer les ouvertures 122 d'alimentation des injecteurs du deuxième circuit 140.

De cette façon, quand la pression du carburant est inférieure à par exemple 2,5 bars, la bille 128 se trouve en butée contre le rebord 127, et par son diamètre supérieure à celui du canal 125, elle obture ce dernier. Le carburant s'écoule alors uniquement vers l'ouverture 121. Lorsque la pression du carburant augmente et dépasse le tarage du ressort (compris entre 2,5 et 3 bars), cette pression est suffisante pour déplacer la bille 128 et permettre l'écoulement du carburant vers les ouvertures 122.

Dans cette dernière situation le carburant s'écoule à la fois vers les ouvertures 122 et l'ouverture 121, de sorte que le circuit d'allumage 130 continue d'être alimenté.

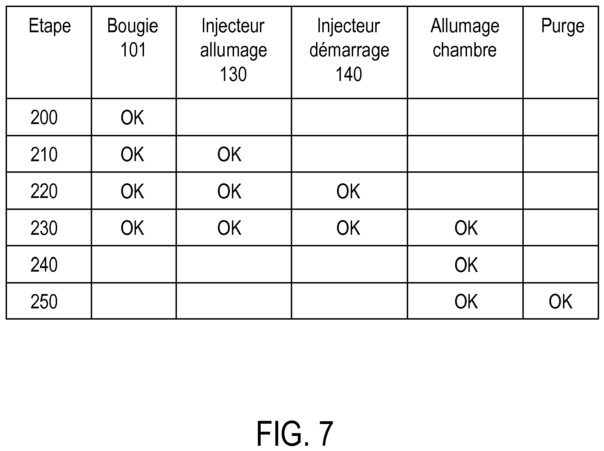

L'agencement décrit ci-avant du circuit d'injection de carburant 120 et des deux injecteurs 130, 140, permet de mettre en oeuvre un cycle d'allumage de la chambre de combustion. Les principales étapes de ce cycle sont représentées en figure 7. Les cases comprenant les termes « OK » indique que l'objet correspondant de la colonne est actionné ou fonctionne.

Au cours d'une étape 200, la bougie 101 est allumée, et du carburant à une pression inférieure au tarage du ressort circule dans le circuit d'injection de carburant.

Au cours d'une étape 210, le carburant pénètre dans le circuit d'allumage et s'enflamme grâce à la bougie.

La pression de carburant augmente au cours d'une étape 220 de sorte que du carburant continue de pénétrer dans le circuit d'allumage et d'y être enflammé, tandis que du carburant est également injecté dans le deuxième compartiment 107 et s'enflamme au contact de la cloison 105. Le carburant enflammé pénètre ensuite dans la chambre de combustion.

Au cours d'une étape 230, la quantité de carburant enflammé injecté dans la chambre de combustion 10 provoque l'allumage de celle-ci.

Au cours d'une étape 240, la bougie ainsi que l'alimentation de carburant sont arrêtées tandis que la chambre de combustion est encore allumée.

Enfin, au cours d'une étape 250, les deux circuits d'allumage de la chambre et le circuit d'injection du carburant sont purgés tous les deux.

Le cycle reprend ensuite à l'étape 200.

## Revendications

1. Ensemble de combustion de turbomachine, comprenant une chambre de combustion (10) de turbomachine, et un injecteur (100) de démarrage de chambre de combustion de turbomachine, disposé sur une paroi de la chambre de combustion et débouchant dans celle-ci au travers d'un orifice de la paroi, l'injecteur de démarrage comportant :
- un circuit d'injection (120) de carburant,
- un circuit d'allumage (130) du carburant, comprenant un injecteur de carburant (132) alimenté par le circuit d'injection (120) de carburant, et une bougie d'allumage (101) du carburant injecté,
- une enceinte cloisonnée (104) comprenant un premier compartiment (106) dans lequel est réalisé l'allumage du carburant par la bougie (101), et un second compartiment (107) séparé du premier par une cloison thermiquement conductrice (105), l'ensemble étant **caractérisé en ce que** le premier compartiment (106) communiquant avec le second compartiment (107) pour que l'ensemble du carburant enflammé soit évacué de l'injecteur (100) par l'ouverture (109) du deuxième compartiment (107), et
- un circuit principal de démarrage (140) de la combustion, comportant au moins un injecteur de carburant (142) alimenté par ledit circuit d'injection de carburant (120), et débouchant dans le deuxième compartiment (107) de l'enceinte est disposé de manière à injecter le carburant contre ladite paroi (105).

2. Ensemble de combustion de turbomachine selon la revendication 1, dans lequel le circuit d'injection de carburant (120) comprend une entrée d'alimentation de carburant et un clapet de surpression (123) configuré pour obturer l'alimentation du circuit de démarrage de la combustion lorsque la pression du carburant est inférieure à un seuil prédéterminé.

3. Ensemble de combustion selon la revendication 2, dans lequel le seuil de pression en-deçà duquel le clapet de surpression (123) est configuré pour obturer l'alimentation du circuit de démarrage de la combustion est compris entre 2.5 et 3 bar.

4. Ensemble de combustion selon l'une des revendications précédentes, dans lequel l'injecteur de carburant du circuit de démarrage (142) est un injecteur de prévaporisation adapté pour vaporiser le carburant.

5. Ensemble de combustion selon l'une des revendications précédentes, dans lequel la bougie d'allumage (101) est une bougie à incandescence ou une bougie à étincelles.

6. Ensemble de combustion selon l'une des revendications précédentes, dans lequel l'enceinte présente des parois extérieures munies d'ouvertures (113, 114) d'admission d'air.

7. Turbomachine (1), comprenant un ensemble de combustion selon l'une des revendications 1 à 6.

8. Turbomachine (1) selon la revendication 7, comprenant un carter (30) dans lequel est disposée la chambre de combustion (10), et l'injecteur de démarrage étant rapporté sur ledit carter de sorte que :
- l'enceinte cloisonnée (104) pénètre à l'intérieur de la chambre de combustion (10) au travers du carter (30) et d'une paroi (14) de ladite chambre, et
- les ouvertures d'admission d'air (113, 114) des parois de ladite enceinte débouchent dans un interstice entre le carter et la chambre de combustion.

## Patentansprüche

1. Verbrennungseinheit einer Turbomaschine, umfassend eine Turbomaschinen-Brennkammer (10) und eine Anlasseinspritzdüse (100) einer Brennkammer einer Turbomaschine, die auf einer Wand der Brennkammer angeordnet ist und in diese durch eine Öffnung der Wand ausmündet, wobei die Anlasseinspritzdüse aufweist:
- einen Kraftstoff-Einspritzkreis (120),
- einen Zündkreis (130) des Kraftstoffs, umfassend eine Kraftstoff-Einspritzdüse (132), die durch den Kraftstoff-Einspritzkreis (120) versorgt wird, und eine Zündkerze (101) des eingespritzten Kraftstoffs,
- einen abgeschlossenen Behälter (104), umfassend ein erstes Abteil (106), in welchem die Zündung des Kraftstoffs durch die Kerze (101) durchgeführt wird, und ein zweites Abteil (107), das von dem ersten durch eine thermisch leitende Trennwand (105) abgeteilt ist, wobei die Einheit **dadurch gekennzeichnet ist, dass** das erste Abteil (106) mit dem zweiten Abteil (107) kommuniziert, damit der gesamte gezündete Kraftstoff von der Einspritzdüse (100) durch die Öffnung (109) des zweiten Abteils (107) entfernt wird, und
- einen Hauptanlasskreis (140) der Verbrennung, aufweisend mindestens eine Kraftstoff-Einspritzdüse (142), die durch den Kraftstoff-Einspritzkreis (120) versorgt wird und in das zweite Abteil (107) des Behälters ausmündet, der derart angeordnet ist, dass der Kraftstoff gegen die Wand (105) eingespritzt wird.

2. Verbrennungseinheit einer Turbomaschine nach Anspruch 1, wobei der Kraftstoff-Einspritzkreis (120) einen Versorgungseinlass mit Kraftstoff und ein Überdruckventil (123) umfasst, das konfiguriert ist, um die Versorgung des Anlasskreises der Verbrennung zu verschließen, wenn der Druck des Kraftstoffs unter einem vorher festgelegten Schwellenwert liegt.

3. Verbrennungseinheit einer Turbomaschine nach Anspruch 2, wobei der Schwellenwert, unter dem das Überdruckventil (123) konfiguriert ist, um die Versorgung des Anlasskreises der Verbrennung zu verschließen, zwischen 2,5 und 3 bar liegt.

4. Verbrennungseinheit nach einem der vorangehenden Ansprüche, wobei die Kraftstoff-Einspritzdüse des Anlasskreises (142) ein Verdampfungsbrenner ist, der zum Zerstäuben des Kraftstoffs geeignet ist.

5. Verbrennungseinheit nach einem der vorangehenden Ansprüche, wobei die Zündkerze (101) eine Glühkerze oder eine Funkenkerze ist.

6. Verbrennungseinheit nach einem der vorangehenden Ansprüche, wobei der Behälter Außenwände aufweist, die mit Luftzufuhröffnungen (113, 114) ausgestattet sind.

7. Turbomaschine (1), umfassend eine Verbrennungseinheit nach einem der Ansprüche 1 bis 6.

8. Turbomaschine (1) nach Anspruch 7, umfassend ein Gehäuse (30), in dem die Brennkammer (10) angeordnet ist, und wobei die Anlasseinspritzdüse auf dem Gehäuse derart angebracht ist, dass:
- der abgeschlossenen Behälter (104) in das Innere der Brennkammer (10) durch das Gehäuse (30) und eine Wand (14) der Kammer eindringt, und
- die Lufteinlassöffnungen (113, 114) der Wände des Behälters in einen Spalt zwischen dem Gehäuse und der Brennkammer ausmünden.

## Claims

1. A turbomachine combustion assembly, comprising a turbomachine combustion chamber (10), and an injector (100) for starting the turbomachine combustion chamber, disposed on a wall of the combustion chamber and opening thereinto through an orifice of the wall, the starting injector including:
- a fuel injection circuit (120),
- a fuel ignition circuit (130), comprising a fuel injector (132) supplied by the fuel injection circuit (120), and a plug (101) for igniting the injected fuel,
- a partitioned enclosure (104) comprising a first compartment (106) in which the ignition of the fuel by the plug (101) is carried out, and a second compartment (107) separated from the first one by a thermally conductive partition (105),
the assembly being **characterized in that** the first compartment (106) communicates with the second compartment (107) so that all the ignited fuel is discharged from the injector (100) through the opening (109) of the second compartment (107), and
- a main circuit (140) for starting the combustion, including at least one fuel injector (142) supplied by said fuel injection circuit (120) and opening into the second compartment (107) of the enclosure by being disposed so as to inject the fuel against said wall (105).

2. The turbomachine combustion assembly according to claim 1, wherein the fuel injection circuit (120) comprises a fuel supply inlet and a pressure relief valve (123) configured to close the supply of the combustion starting circuit when the fuel pressure is below a predetermined threshold.

3. The combustion assembly according to claim 2, wherein the pressure threshold below which the pressure relief valve (123) is configured to close the supply of the combustion starting circuit is comprised between 2.5 and 3 bars.

4. The combustion assembly according to any of the preceding claims, wherein the fuel injector of the starting circuit (142) is a pre-vaporization injector adapted to vaporize the fuel.

5. The combustion assembly according to any of the preceding claims, wherein the ignition plug (101) is a glow plug or a spark plug.

6. The combustion assembly according to any of the preceding claims, wherein the enclosure has outer walls provided with air intake openings (113, 114).

7. A turbomachine (1) comprising a combustion assembly according to any of claims 1 to 6.

8. The turbomachine (1) according to claim 7, comprising a casing (30) in which the combustion chamber (10) is disposed, and the starting injector being added onto said casing so that:
- the partitioned enclosure (104) penetrates into the combustion chamber (10) through the casing (30) and a wall (14) of said chamber, and
- the air intake openings (113, 114) of the walls of said enclosure open into an interstice between the casing and the combustion chamber.
